# EUROPÄISCHE PATENTSCHRIFT

(11) **EP 3 451 506 B1**
(45) Veröffentlichungstag und Bekanntmachung des Hinweises auf die Patenterteilung: **02.06.2021**
(21) Anmeldenummer: 18185370.6
(22) Anmeldetag: 25.07.2018
(51) Int. Cl.: H02K 3/50, H02K 3/38

(54) **VERSCHALTUNGSANORDNUNG FÜR EINE ELEKTRISCHE MASCHINE**
CIRCUIT ARRANGEMENT FOR AN ELECTRIC MACHINE
DISPOSITIF D'INTERCONNEXION POUR UNE MACHINE ÉLECTRIQUE

(30) Priorität: 28.08.2017 DE 102017214958
(43) Veröffentlichungstag der Anmeldung: 06.03.2019
(73) Patentinhaber: ZF Friedrichshafen AG, 88046 Friedrichshafen (DE)
(72) Erfinder: Willacker, Katja, 97353 Wiesentheid (DE); Wittmann, Jochen, 97705 Burkardroth (DE); Wittstadt, Ralf, 97464 Niederwerrn (DE); Wieder, Christoph, 96328 Küps (DE); Lindwurm, Roland, 97526 Sennfeld (DE); Schmitt, Daniel, 97708 Bad Bocklet (DE); Wolf, Walter, 97440 Werneck (DE); Grübel, Andre, 97486 Königsberg (DE); Schäflein, Alexander, 97199 Ochsenfurt (DE); van Heyden, Marcus, 97456 Dittelbrunn (DE)
(74) Vertreter: ZF Friedrichshafen AG

(56) Entgegenhaltungen:
- DE-A1-102014 211 923
- DE-A1-102016 200 115
- DE-U1-202004 016 463
- US-A1- 2014 014 390
- US-A1- 2016 308 426

## Beschreibung

Die vorliegende Erfindung betrifft eine elektrische Maschine mit einer Verschaltungsanordnung. Insbesondere betrifft die Erfindung eine elektrische Maschine mit einer Verschaltungsanordnung zur elektrischen Kontaktierung von Wicklungsabschnitten der elektrischen Maschine.

Eine elektrische Maschine umfasst einen Stator und einen Rotor, die um eine Drehachse gegeneinander drehbar gelagert sind. Der Stator umfasst eine Vielzahl Bleche, die axial gestapelt sind und axiale Nuten aufweisen, in denen Leiterstücke einer Wicklung liegen. Ein durch die Leiterstücke fließender elektrischer Strom soll mittels einer Verschaltungsanordnung an elektrische Anschlüsse geführt werden. Dazu können komplexe Kontaktierungen bzw. Leiterführungen zwischen den Leiterstücken erforderlich sein und Sammel- bzw. Verteilelemente für elektrische Ströme können schwierig zu handhaben sein.

JP 2016 032 392 A betrifft eine Verschaltungsanordnung für eine elektrische Maschine mit Hairpin-Wicklung. Eine solche Wicklung umfasst eine Vielzahl von Hairpin-Elementen, die im Wesentlichen U-förmige Leiterstücke darstellen, deren Enden axial in ein Statorpaket eingeschoben, zusammen gebogen und elektrisch miteinander verbunden werden können. Eine vorgeschlagene Verschaltungsanordnung umfasst elektrische Sammelschienen zur Verbindung mit den Enden der Leiterstücke und einen Ring mit axialen Ausnehmungen zum Durchtritt der Leiterstücke. Die Verschaltungsanordnung kann axial auf die Leiterstücke aufgeschoben werden. Anschließend können die Leiterstücke gegenüber dem Ring gebogen und untereinander bzw. mit den Sammelschienen verbunden werden. Das Biegen und Kontaktieren kann eine Vielzahl Leiterstücke mit nennenswerten Querschnitten betreffen, bei deren Bearbeitung die Sammelschienen stören können. CN 203 933 206 U schlägt eine Verschaltungsanordnung vor, die einen axialen Stapel von Isolierscheiben umfasst, zwischen denen Kontaktelemente eingelegt sind. Diese Variante nimmt jedoch erheblichen axialen Bauraum in Anspruch.

Weiterer Stand der Technik für Verschaltungsanordnungen ist beispielsweise aus der US 2014/014390 A1, der DE 10 2016 200 115 A1 oder der DE 10 2014 211 923 A1 bekannt.

Aus der DE 20 2004 016463 U1 ist des Weiteren ein Bauelement für die Leiterplattenbestückung bekannt, welches einen mit einer Leiterplatte verrastbaren Grundträger enthält.

Eine der Erfindung zu Grunde liegende Aufgabe besteht in der Bereitstellung einer verbesserten Verschaltungsanordnung zur Kontaktierung einer elektrischen Maschine. Die Erfindung löst diese Aufgabe mittels der Gegenstände der unabhängigen Ansprüche. Unteransprüche geben bevorzugte Ausführungsformen wieder.

Eine elektrische Maschine umfasst mehrere Phasen, wobei jeder Phase eine Wicklung zugeordnet ist. Eine Verschaltungsanordnung für die elektrische Maschine umfasst ein Trägerelement mit einem ringförmigen Abschnitt, der zur Anlage an einem axialen Ende der elektrischen Maschine eingerichtet ist; und mehrere axial versetzte, scheibenförmige Schaltringe, wobei jeder Schaltring zur Kontaktierung einer Wicklung eingerichtet ist. Dabei weist das Trägerelement mehrere auf einem Umfang verteilte axiale Befestigungselemente auf und die Schaltringe weisen jeweils Aussparungen zum Durchtritt der Befestigungselemente auf.

Das Trägerelement ist bevorzugt zur mechanischen Stützung der Schaltringe eingerichtet und dient des Weiteren der Isolation. Die Schaltringe können durch das Trägerelement axial versetzt gehalten sein, sodass ein gegenseitiger unerwünschter elektrischer Kontakt (Kurzschluss) bei Einhaltung entsprechender Luft- und Kriechstrecken verhindert sein kann. Ein umgebendes Medium, insbesondere Luft oder Öl, kann elektrisch isolierend wirken. Durch die Fixierung kann auf eine zusätzliche elektrische Isolation der Schaltringe, etwa durch Beschichten, verzichtet werden. Die Verschaltungsanordnung kann dadurch insbesondere in axialer Richtung vorteilhaft kompakt ausgeführt sein. Außerdem kann die Verschaltungsanordnung eine separat handhabbare Einheit bilden, die leicht an der elektrischen Maschine angebracht werden kann. Elemente der Verschaltungsanordnung können dabei unverlierbar gehalten sein.

Die elektrische Maschine kann als permanenterregte Synchronmaschine (PSM) aufgebaut sein, die einen Stator mit den Wicklungen und einen Rotor mit Permanentmagneten umfasst. In einer Ausführungsform sind die Wicklungen als Hairpin-Wicklungen realisiert und umfassen jeweils mehrere Hairpin-Elemente, die im Bereich der Verschaltungsanordnung untereinander und mit der Verschaltungsanordnung kontaktiert werden können. Die Verschaltungsanordnung kann jedoch auch an einer anders aufgebauten elektrischen Maschine eingesetzt werden.

Eines der Befestigungselemente kann einen in axialer Richtung stufenförmig abnehmenden Querschnitt aufweisen, wobei zu dem Befestigungselement korrespondierende Aussparungen der Schaltringe so gewählt sind, dass die Schaltringe jeweils axial an einer Schulter oder Stufe des Befestigungselements anliegen. Die Schaltringe können so einfach und sicher an vorbestimmten axialen Positionen gehalten sein. Eine Reihenfolge, in der die Schaltringe auf dem Befestigungselement angeordnet werden können, kann dabei bereits vorgegeben sein. Montagefehler können dadurch vermieden werden ("Poka Yoke", Vermeidung unglücklicher Fehler).

Die Verschaltungsanordnung kann ferner Abstandselemente umfassen, die jeweils zur axialen Anlage zwischen benachbarten Schaltringen eingerichtet sind. Dabei können die Abstandselemente jeweils Aussparungen zum Durchtritt eines Befestigungselements aufweisen. Axiale Abstände zwischen den Schaltringen können durch axiale Ausdehnungen der Abstandselemente eingestellt werden. Dabei können Abstandselemente zwischen unterschiedlichen Schaltringen auch unterschiedliche axiale Abmessungen aufweisen. Die Abstandselemente können insbesondere hülsenförmig ausgeführt sein, etwa in der Form von Hohlzylindern. In einer weiteren Ausführungsform kann ein Abstandselement auch T-förmig ausgebildet sein. Mehrere Abstandselemente können miteinander integriert ausgeführt sein, etwa als Abstandsplatte. Kombinationen dieser Varianten sind ebenfalls möglich. Das Abstandselement kann in Kombination mit einem zylindrischen Befestigungselement eingesetzt werden, um axiale Anlageflächen für die Schaltringe zu bilden, oder an einem sich stufenförmig verjüngenden Befestigungselement, um dessen axiale Anlageflächen zu vergrößern oder zu entlasten. Das Abstandselement ist bevorzugt aus einem elektrisch isolierenden Material herstellbar, beispielsweise Kunststoff.

Die Verschaltungsanordnung kann ferner ein Sicherungselement an einem axialen Ende des Befestigungselements umfassen. Mittels des Sicherungselements kann ein axiales Abgleiten der Schaltringe nach ihrer Anbringung am Trägerelement verhindert werden. Das Sicherungselement kann dazu eingerichtet sein, eine vorbestimmte axiale Spannkraft auf die Schaltringe auszuüben. In einer bevorzugten Ausführungsform ist ein axiales Ende des Befestigungselements in das Sicherungselement umformbar. Beispielsweise kann das axiale Ende unter Einsatz von Wärme oder Kraft umgeformt werden, um eine Art Nietkopf zu bilden. Das Umformen kann ein Verstemmen, Heißverstemmen, ein Reibschweißen oder ein Fließpressen umfassen. Eine Kaltverformung ist ebenfalls möglich. Ebenso ist auch eine mechanische Verbindung ohne Umformen möglich, beispielsweise unter Benutzung eines Sprengringes oder einer Halteklammer.

Das Trägerelement kann zur stoffschlüssigen Befestigung, etwa mittels Schweißen, zur kraftschlüssigen Befestigung, etwa mittels Schrauben oder Nieten, zur formschlüssigen Befestigung oder zum Kleben an der elektrischen Maschine eingerichtet sein. Beispielsweise kann das Trägerelement zur Ausbildung der gegenseitigen Verbindung mehrere Befestigungsbereiche in Form radialer Auskragungen aufweisen, welche sich mit entsprechenden Auskragungen an einem Statorträger in gegenseitiger Deckung befinden.

Erfindungsgemäß ist am ringförmigen Abschnitt des Trägerelements in entgegengesetzter axialer Richtung zum Befestigungselement ein Rastelement zum Eingriff in eine korrespondierende Aussparung an der elektrischen Maschine ausgebildet. Das Rastelement kann lösbar oder unlösbar sein. Die Verschaltungsanordnung kann während eines Montageprozesses mittels des Rastelements an der Maschine gehalten sein. Der Montageprozess kann eine weitere Befestigung der Verschaltungsanordnung, beispielsweise in Form einer mechanisch belastbaren Kontaktierung der Schaltringe mit den Spulen, umfassen, sodass die Verschaltungsanordnung im Betrieb der Maschine mehrfach gesichert ist.

Das Rastelement umfasst Rasthaken, die radial zu einer Längsachse des Rastelements, die parallel zur Drehachse der elektrischen Maschine verlaufen kann, elastisch gelagert sind. Dabei ist außerdem ein Arretierungsstift vorgesehen, der koaxial zur Längsachse auf die radiale Innenseite der Rasthaken geschoben werden kann, um radial an den Rasthaken anzuliegen. Durch den Arretierungsstift kann die radiale Beweglichkeit der Rasthaken eingeschränkt werden, sodass sie nicht nachgeben und so die Verschaltungsanordnung sicher an der elektrischen Maschine halten können.

Der Arretierungsstift kann koaxial zur Längsachse des Rastelements, aber entgegen dessen axialer Richtung am ringförmigen Abschnitt des Trägerelements ausgebildet sein. Dabei ist zwischen dem Arretierungsstift und dem ringförmigen Abschnitt bevorzugt eine Sollbruchstelle ausgebildet. Der Arretierungsstift kann während der Montage der Verschaltungsanordnung unverlierbar gehalten sein. Mehrere Arretierungsstifte mehrerer vorgesehener Rastelemente können in einem Arbeitsgang eingeschoben werden. Die Sollbruchstelle kann insbesondere als Ringnut zwischen dem ringförmigen Abschnitt und dem Arretierungsstift gebildet sein. Die Sollbruchstelle kann an einer axial der elektrischen Maschine zugewandten Seite des ringförmigen Abschnitts ausgebildet sein. Von dort zu einer axial der elektrischen Maschine abgewandten Seite des ringförmigen Abschnitts kann eine Ringnut um den Arretierungsstift vorgesehen sein. Die Ringnut kann axial trichterförmig ausgebildet sein.

In einer Drehebene um die Drehachse der elektrischen Maschine können zwei Schaltringe angeordnet sein, die zur Verbindung mit unterschiedlichen Phasen eingerichtet sind. Insbesondere kann die Maschine elektrisch zwei voneinander unabhängige Sätze von Wicklungen umfassen, sodass elektrisch zwei Maschinen vorgesehen sein können, die mechanisch als nur eine Maschine realisiert sind. Jeder elektrischen Maschine können mehrere Phasen zugeordnet sein. Zueinander korrespondierende Phasen elektrisch unterschiedlicher Maschinen können an Schaltringe der gleichen axialen Position geführt sein. Üblicherweise umfasst jede elektrische Maschine drei Phasen (U, V, W) und drei jeweils zugeordnete Schaltringe. Wicklungen der drei zusammengehörigen Phasen können jeweils sternförmig elektrisch miteinander verbunden sein, wobei der Sternpunkt, an welchem alle drei Wicklungen miteinander kontaktiert sind, an den weiteren Schaltring geführt sein kann. Dieser Kontakt wird auch neutrale Phase genannt und kann an einen weiteren Schaltring geführt sein, der auch neutraler Schaltring genannt werden kann.

Ausführungsformen mit mehr als zwei Schaltringen pro Ebene sind ebenfalls möglich. In einer anderen Ausführungsform ist aus elektrischer Sicht nur eine Maschine vorgesehen, wobei einer der Schaltringe nur einen Umfangsteilbereich einnimmt, sich also bevorzugt auf einem vorbestimmten Winkelbereich eines Kreisrings erstreckt.

Ein Schaltring kann mehrere radiale Anschlussabschnitte zur Kontaktierung einer Wicklung aufweisen, wobei die Anschlussabschnitte eines oder verschiedener Schaltringe bevorzugt in gleichen axialen Höhen bezüglich der Drehachse der elektrischen Maschine liegen. Bevorzugt sind die Anschlussabschnitte zusätzlich axial ausgestellt, ragen also aus der Erstreckungsebene senkrecht zur Drehachse der elektrischen Maschine axial weg. Ein Kontaktieren der Wicklungen miteinander oder mit den Schaltringen, beispielsweise durch Schweißen, bevorzugt durch Laserschweißen, kann durch eine verbesserte Zugänglichkeit der Verbindungspunkte erleichtert sein. Außerdem kann dadurch leichter ein temporärer oder permanenter axialer Deckel angebracht werden, um zu verhindern, dass Metallspritzer während des Schweißvorgangs mechanisch oder elektrisch ungünstig in die Verschaltungsanordnung oder die elektrischen Maschine eindringen.

Die Verschaltungsanordnung kann ferner ein Abdeckelement zur axialen Abdeckung der Wicklungen umfassen, wobei das Abdeckelement axiale Befestigungsabschnitte aufweist, die jeweils am ringförmigen Abschnitt des Trägerelements enden. Die Schaltringe können dadurch in axialer Richtung verbessert elektrisch isoliert oder gegen Verschmutzung geschützt werden. Durch das Abstützen der Befestigungsabschnitte am ringförmigen Abschnitt kann eine mechanische Belastung verbessert abgeleitet werden.

Die Befestigungsabschnitte können jeweils Aussparungen zum axialen Durchtritt eines Befestigungselements aufweisen. Dadurch kann das Abdeckelement in ähnlicher Weise wie die Schaltringe auf die Befestigungselemente des Trägerelements aufgefädelt werden. Bevorzugt wird das Abdeckelement zeitlich vor den Schaltringen am Trägerelement angebracht. Das Abdeckelement kann aus einem isolierenden Material wie Kunststoff herstellbar sein. In einer Ausführungsform ist das Abdeckelement in sich biegsam ausgeführt. Das Abdeckelement kann einstückig mit dem Trägerelement ausgeführt sein, wodurch ein Produktions- oder Handhabungsaufwand weiter verringert sein kann. Selbstverständlich kann das Abdeckelement auch mehrteilig ausgeführt sein.

Das Abdeckelement kann auch gemäß einer weiteren abgewandelten Ausführungsform in Anlehnung an die vorstehenden Erläuterungen durch Einklemmen in einen axial zwischen den Enden der Hairpin-Elemente und den Anschlussabschnitten der Schaltringe ausgebildeten Zwischenraum festgelegt werden, so dass damit vorstehend erläuterte gesondert ausgebildete Befestigungsabschnitte entfallen können.

Die elektrische Maschine kann eine Hairpin-Wicklung aufweisen und das Abdeckelement kann Trennelemente zur Anlage zwischen benachbarten Hairpin-Elementen der Hairpin-Wicklung aufweisen. An den Trennelementen können axiale Vorsprünge vorgesehen sein, welche in Umfangsrichtung und/oder radialer Richtung zwischen den Hairpin-Elementen liegen und für eine zusätzliche Isolation, insbesondere zwischen Hairpin-Elementen mit unterschiedlicher elektrischer Phase sorgen.

Die elektrische Maschine umfasst die hierin beschriebene Verschaltungsanordnung. Die elektrische Maschine kann insbesondere einen elektrischen Antriebsmotor, beispielsweise für einen Traktionsantrieb und bevorzugt für ein Kraftfahrzeug, umfassen. Dabei kann die elektrische Maschine eine Dauerleistung im Bereich von ca. 70 - 100 kW umsetzen. Eine kurzzeitige Spitzenleistung kann ca. 50% über diesem Wert liegen. Die elektrische Maschine kann bezüglich ihrer Leistungsdichte oder ihres Leistungsgewichts optimiert sein.

Ein Verfahren zur Montage einer Verschaltungsanordnung an einer elektrischen Maschine mit mehreren Phasen, wobei jeder Phase eine Wicklung zugeordnet ist, umfasst Schritte des axialen Aufschiebens mehrerer scheibenförmiger Schaltringe auf ein ringförmiges Trägerelement, das zur Anlage an einem axialen Ende der elektrischen Maschine eingerichtet ist; des Fixierens der Schaltringe am Trägerelement; des Anbringens des Trägerelements mit den Schaltringen an der elektrischen Maschine; und des Kontaktierens der Schaltringe mit den Wicklungen. Dadurch kann insbesondere die hierin genannte Verschaltungsanordnung sicher und mit wenig Aufwand an einer elektrischen Maschine angebracht werden.

Die Erfindung wird nun mit Bezug auf die beigefügten Figuren genauer beschrieben, in denen:
- Fig. 1: eine elektrische Maschine mit einer Verschaltungsanordnung;
- Fig. 2: eine Verschaltungsanordnung für eine elektrische Maschine in einer Ausführungsform;
- Fig. 3: zwei Ansichten eines Trägerelements für eine Verschaltungsanordnung;
- Fig. 4: Längsschnitte durch ein Trägerelement in unterschiedlichen Montagephasen;
- Fig. 5: Längsschnitte durch Verschaltungsanordnungen in zwei weiteren Ausführungsformen;
- Fig. 6: einen Längsschnitt durch eine Verschaltungsanordnung in noch einer weiteren Ausführungsform;
- Fig. 7: zwei Ansichten eines Abdeckelements;
- Fig. 8: einen Längsschnitt durch eine Verschaltungsanordnung mit einem Abdeckelement;
- Fig. 9: einen Längsschnitt durch ein Abdeckelement in einer Ausführungsform;
- Fig. 10: ein Trägerelement mit integriertem Abdeckelement; und
- Fig. 11: ein Ablaufdiagramm eines Verfahrens zur Montage einer Verschaltungsanordnung darstellt.

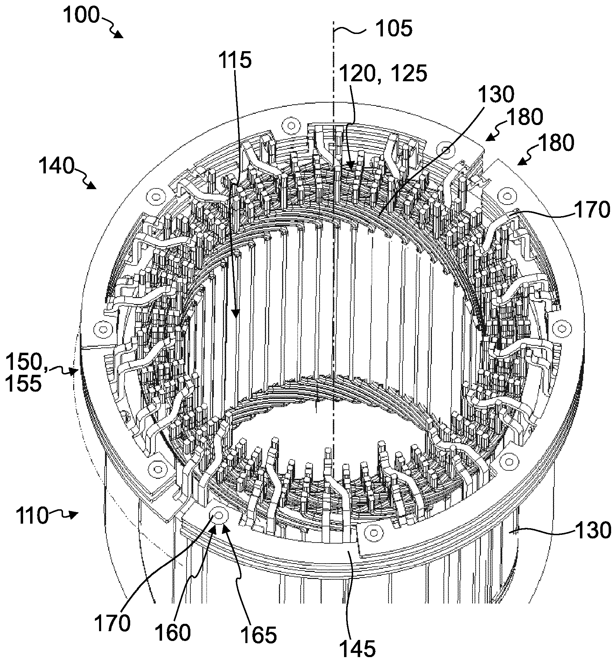

Figur 1 zeigt eine beispielhafte elektrische Maschine 100, die eine Drehachse 105 umfasst, um die ein Stator 110 gegenüber einem drehbar gelagerten Rotor 115 (nicht dargestellt) angeordnet ist. In diesem Dokument beziehen sich polare Angaben, falls nicht anders angegeben, stets auf die Drehachse 105 der elektrischen Maschine 100. Beispielhaft ist die Maschine 100 als permanenterregte Synchronmaschine mit radial außen liegendem Stator 110 und innen liegendem Rotor 115 ausgeführt, andere Ausführungsformen sind ebenfalls möglich.

Am Stator 110 sind mehrere Wicklungen 120 angebracht, die jeweils einer von drei Phasen 125 zugeordnet sind. Die Wicklungen 120 sind bevorzugt als Hairpin-Wicklungen mit Hairpin-Elementen 135 ausgeführt. Ein Hairpin-Element 135 ist im Wesentlichen U-förmig gebogen und umfasst zwei voneinander beabstandete Leiterstücke und einen dazwischen liegenden Biegeabschnitt. Die Leiterstücke werden in verschiedene axiale Nuten eines magnetischen Leitelements 130, das insbesondere als axialer Stapel von Blechen ausgeführt sein kann, eingeschoben, sodass ihre Enden auf einer axialen Seite überstehen. Die Enden werden dann üblicherweise gleichzeitig gebogen, und zwar derart, dass vorbestimmte Enden miteinander in Anlage gebracht werden können. Das Biegen erfolgt üblicherweise in Umfangsrichtung um die Drehachse 105 und bevorzugt auch in einer radial äußeren Richtung. Nach dem Biegen können einander zugeordnete Enden der Hairpin-Elemente 135 elektrisch miteinander verbunden werden, beispielsweise durch Schweißen.

Eine Verschaltungsanordnung 140 umfasst bevorzugt für jede Phase 125 bzw. Wicklung 120 einen Schaltring 145, wobei mehrere Schaltringe 145 axial gegeneinander versetzt bezüglich der Drehachse 105 liegen. Die Schaltringe 145 sind aus einem elektrisch leitfähigen Material, beispielsweise Kupfer hergestellt und können unisoliert sein. Alternativ können sie an ihren Oberflächen mittels einer Beschichtung oder einem Lack elektrisch isoliert sein, beispielsweise mit Araldit. Die Schaltringe 145 sind bevorzugt jeweils im Wesentlichen scheibenförmig, erstrecken sich also im Wesentlichen in einer Rotationsebene zur Drehachse 105 und haben eine radiale Erstreckung, die um wenigstens eine Größenordnung größer als ihre axiale Erstreckung ist. Die Grundform eines Schaltrings kann einem Kreisring entsprechen, der vollständig oder auf einem vorbestimmten Winkelbereich ausgenutzt ist. In einer Ausführungsform sind in einer axialen Ebene zwei oder mehr elektrisch getrennte Schaltringe 145 angeordnet, die unterschiedlichen Phasen 125 zugeordnet sein können.

An einem dem magnetischen Leitelement 130 zugewandten axialen Ende der Verschaltungsanordnung 140 liegt ein Trägerelement 150, das aus einem elektrisch isolierenden Material, insbesondere einem duroplastischen oder thermoplastischen Kunststoff, zum Beispiel PEEK, PA, PBT, PPA, PPS oder aus einem Elastomer herstellbar ist. Das Trägerelement 150 umfasst einen ringförmigen Abschnitt 155 und mehrere auf einem Umfang um die Drehachse 105 verteilte Befestigungselemente 160, die durch axiale Aussparungen 165 in den Schaltringen 145 verlaufen. An einer dem ringförmigen Abschnitt 155 entfernten axialen Seite ist bevorzugt ein Sicherungselement 170 vorgesehen, um die Schaltringe 145 axial zu verriegeln.

An den Schaltringen 145 können Anschlussabschnitte 175 angebracht sein, die zur elektrischen Kontaktierung mit Hairpin-Elementen 135 eingerichtet sind. Ein Anschlussabschnitt 175 erstreckt sich bevorzugt radial nach innen und kann ferner in einer axialen Richtung verlaufen. Die Kontaktierung von Hairpin-Elementen 135 untereinander oder mit einem Anschlussabschnitt 175 erfolgt bevorzugt mittels Schweißen, insbesondere Laser-Schweißen. An den Schaltringen 145 können elektrische Anschlüsse 180 der elektrischen Maschine 100 ausgebildet oder mit ihnen verbunden sein. Durch entsprechende Beschaltung kann die Maschine 100 als Antriebsmotor oder als Generator verwendet werden.

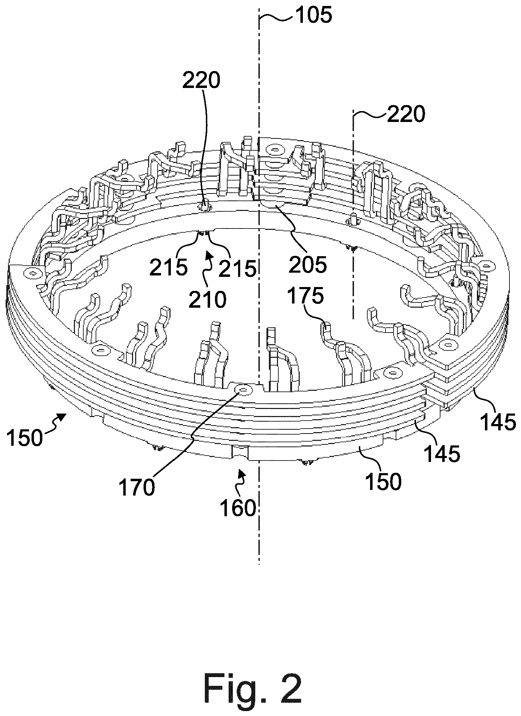

Figur 2 zeigt eine Verschaltungsanordnung 140 für eine elektrische Maschine 100 der Art von Figur 1 in einer Ausführungsform. Die Schaltringe 145 liegen hier in vier verschieden axialen Ebenen bezüglich der Drehachse 105. In der dargestellten Ausführungsform ist die Verschaltungsanordnung 140 für eine elektrische Maschine 100 mit zwei Sätzen mit je drei Phasen 125 eingerichtet. Elektrisch können dadurch zwei voneinander unabhängige elektrische Maschinen 100 gebildet sein. Dabei ist jede Phase 125 einer Wicklung 120 zugeordnet und die drei einander zugeordneten Wicklungen 120 sind sternförmig mit einer neutralen Phase verschaltet. Insgesamt ergeben sich so acht elektrische Verbindungen zu den Wicklungen 120, nämlich pro Satz je einmal U, V, W und die neutrale Phase. Zueinander korrespondierende Phasen 125 jedes Satzes können Schaltringen 145 der gleichen axialen Ebene zugeordnet sein. Schaltringe 145 einer Ebene erstrecken sich jeweils im Wesentlichen auf einem vorbestimmten Winkelbereich eines Kreisrings um die Drehachse 105.

Axial zwischen benachbarten Schaltringen 145 können Abstandselemente 205 vorgesehen sein, die bevorzugt jeweils Aussparungen 165 zum axialen Durchtritt des Befestigungselements 160 aufweisen. Am ringförmigen Abschnitt 155 des Trägerelements 150 sind Rastelemente 210 ausgebildet, die sich axial in Richtung der elektrischen Maschine 100 bzw. des magnetischen Leitelements 130 erstrecken und bevorzugt auf einem Umfang um die Drehachse 105 verteilt sind. Wie unten noch genauer beschrieben wird, umfassen die Rastelemente 210 Rasthaken 215, die dazu eingerichtet sind, axial in eine korrespondierende Ausnehmung der elektrischen Maschine 100 eingeschoben zu werden. Dabei weisen die Rasthaken 215 bevorzugt jeweils eine Hinterschneidung auf und sind erfindungsgemäß in einer Richtung radial zu einer Längsachse 220 des Rastelements 210 flexibel. Beim Einschieben in die Ausnehmung kann ein Rasthaken 215 radial nach innen gebogen werden. Die Ausnehmung ist bevorzugt in einer vorbestimmten Einstecktiefe weiter als an einer Oberfläche, sodass der Rasthaken 215 in diesen Teil der Ausnehmung eingreifen kann. Ein erfindungsgemäßer

Arretierungsstift 225 kann anschließend konzentrisch zur Längsachse 220 zwischen die Rasthaken 215 eines Rastelements 210 eingeschoben werden, sodass die Rasthaken 215 an einer bezüglich der Längsachse 220 radial nach innen gerichteten Bewegung gehindert sind. Das Rastelement 210 ist somit formschlüssig an der elektrischen Maschine 100 gehalten und kann nicht mehr axial aus der Aussparung gezogen werden.

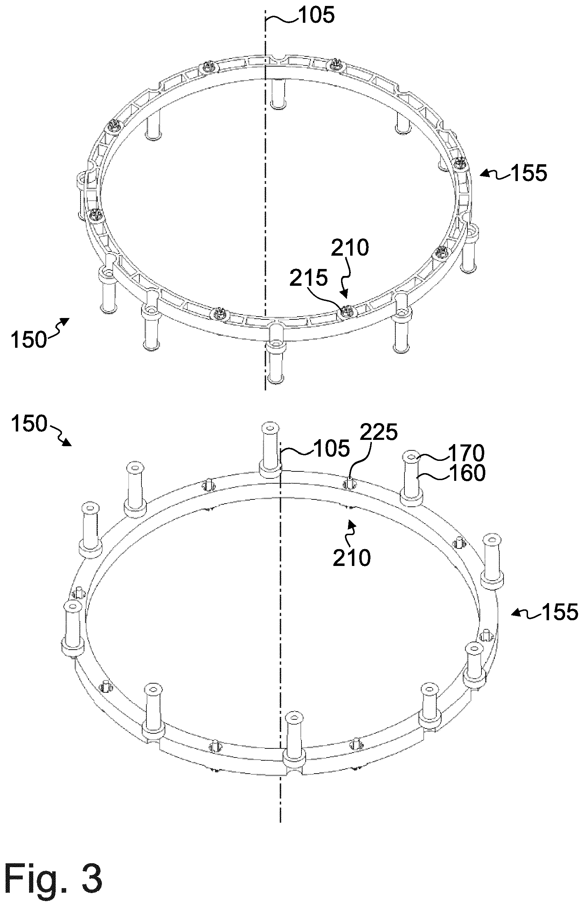

Figur 3 zeigt zwei Ansichten eines Trägerelements 150 für eine Verschaltungsanordnung 140. Das Trägerelement 150 ist in Schrägansichten von unterschiedlichen axialen Seiten dargestellt, sodass die Befestigungselemente 160 einmal nach oben und einmal nach unten weisen. Die Rastelemente 210 weisen jeweils in die entgegengesetzten axialen Richtungen.

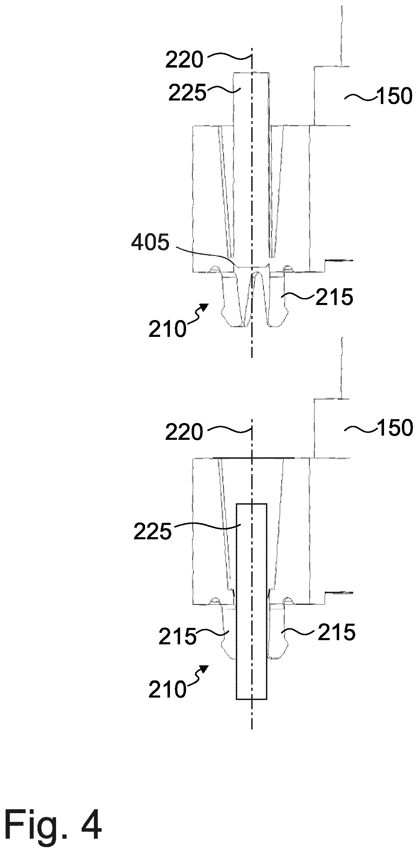

Figur 4 zeigt Längsschnitte durch ein Trägerelement 150 in einer Ausführungsform in unterschiedlichen Montagephasen. Im oberen Bereich ist das Trägerelement 150 vor der Anbringung an der elektrischen Maschine 100 und im unteren Bereich nach der Anbringung gezeigt. Der Arretierungsstift 225 ist in der dargestellten Ausführungsform einstückig mit dem Trägerelement 150 ausgebildet, wobei zwischen den Elementen eine Sollbruchstelle 405, hier in Form einer Ringnut, vorgesehen ist.

Vor dem Einschieben der Rasthaken 215 in eine Aussparung liegt der Arretierungsstift 225, gehalten durch die noch intakte Sollbruchstelle 405, axial außerhalb eines Einflussbereichs auf die Rasthaken 215. Nach dem Einsetzen der Rasthaken 215 in eine passende Ausnehmung kann die Sollbruchstelle 405 durch Anwenden einer axialen Kraft auf den Arretierungsstift 225 geöffnet und der Arretierungsstift 225 entlang der Längsachse 220 axial zwischen die Rasthaken 215 geschoben werden, sodass die Rasthaken 215 radial arretiert sind.

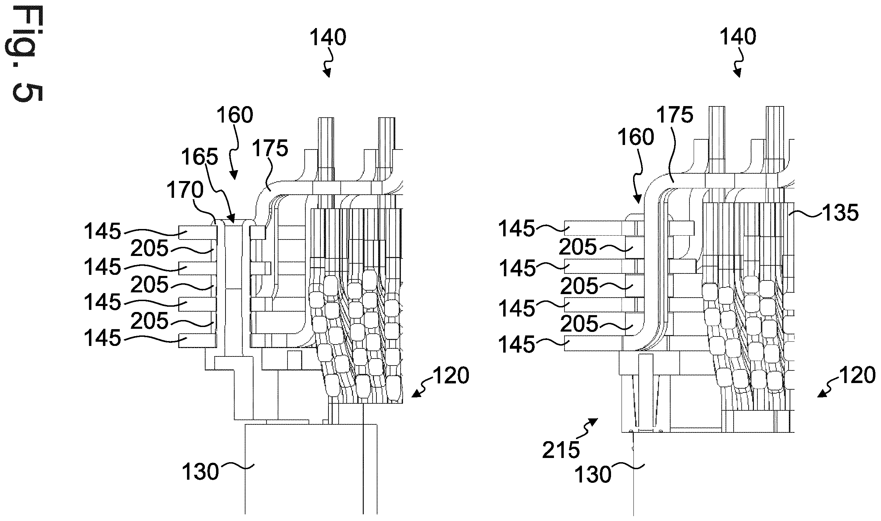

Figur 5 zeigt Längsschnitte durch Verschaltungsanordnungen 140 in einer Ausführungsform. Die Darstellungen unterscheiden sich in ihren Schnittebenen, die bezüglich der Drehachse 105 einen spitzen Winkel miteinander einschließen. Die Schnittebene der linken Darstellung verläuft durch ein Befestigungselement 160, während die Schnittebene der rechten Darstellung durch ein Rastelement 215 verläuft.

In der gewählten Ausführungsform liegen zwischen axial benachbarten Schaltringen 145 an jedem Befestigungselement 160 je ein Abstandselement 205. Am oberen axialen Ende des Befestigungselements 160 ist das Sicherungselement 170 ausgebildet, und zwar bevorzugt durch Umformen des obersten Abschnitts des Befestigungselements 160, beispielsweise durch Reibschweißen, Heißverstemmen, Ultraschallschweißen, Heißnieten oder ähnliches. Dabei kann ein nietenähnlicher Kopf ausgebildet werden, der einen größeren Querschnitt als die Aussparung 165 des anliegenden Schaltrings 145 hat. An dem mit Fig. 3 dargestellten Befestigungselementen 160 sind die Sicherungselemente 170 lediglich zum Zwecke der Erläuterung dargestellt. Es versteht sich von selbst, dass die Sicherungselemente 170 erst nach der Anordnung der Schaltringe an den Befestigungselementen 160 ausgebildet werden.

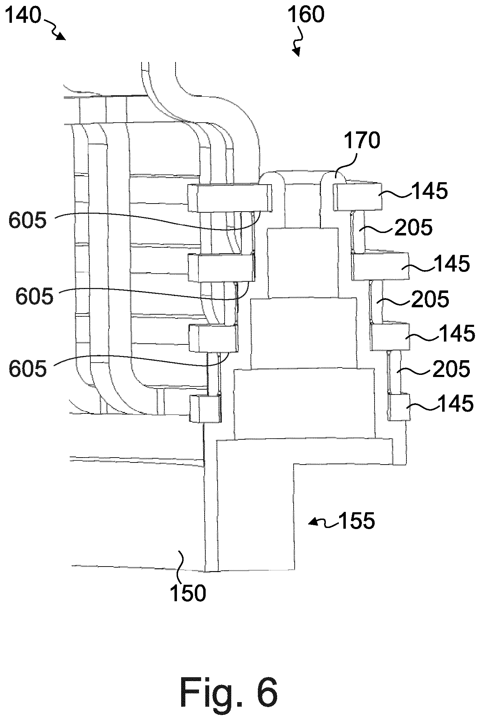

Figur 6 zeigt einen Längsschnitt durch eine Verschaltungsanordnung 140 in noch einer weiteren Ausführungsform. Hier ist das Befestigungselement 160 mit in axialer Richtung stufenförmig abnehmendem Querschnitt ausgeführt. Aussparungen 165 der Schaltringe 145 sind dabei entsprechend gewählt. Die angebrachten Schaltringe 145 können so jeweils axial an einer Stufe des Befestigungselements 160 anliegen. Der axial am nächsten am ringförmigen Abschnitt 155 des Trägerelements 150 liegende Schaltring 145 weist die größte Aussparung 165 und der am weitesten entfernte Schaltring 145 die kleinste Aussparung 165 auf.

Am Befestigungselement 160 sind zwischen axialen Abschnitten unterschiedlicher Querschnitte bevorzugt jeweils Schultern 605 ausgebildet, die sich in axialer Richtung erstrecken und eine Anlagefläche für die Schaltringe 145 bilden können. Optional sind zwischen axial benachbarten Schaltringen 145 Abstandselemente 205 eingesetzt, welche die axiale Anlagefläche für die Schaltringe 145 vergrößern oder bilden können.

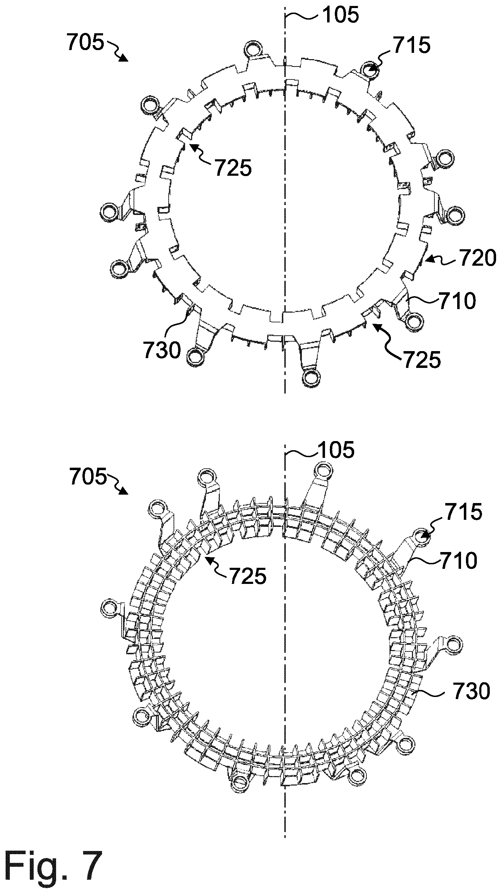

Figur 7 zeigt zwei Ansichten eines Abdeckelements 705, das zur axialen Abdeckung der Wicklungen 120 der elektrischen Maschine 100 eingerichtet ist. Dabei kann das Abdeckelement 705 aus einem isolierenden Material wie Kunststoff herstellbar sein. Bevorzugt ist eine Kombination aus Material und Wandstärken derart gewählt, dass das Abdeckelement 705 flexibel ist, um sich in einem vorbestimmten Maß an die Form der elektrischen Maschine 100 anpassen zu können. Das Abdeckelement 705 umfasst bevorzugt Befestigungsabschnitte 710, die sich jeweils in axialer Richtung erstrecken und die auf einem Umfang um die Drehachse 105 versetzt angeordnet sein können. Die Befestigungsabschnitte 710 sind dazu eingerichtet, am ringförmigen Abschnitt 155 des Trägerelements 150 anzuliegen und bevorzugt auch an diesem befestigt zu werden. Dazu können sich Enden der Befestigungsabschnitte 710 in radialer Richtung erstrecken und jeweils eine Aussparung 715 tragen, durch die ein Befestigungselement 160 geführt werden kann. Andere Befestigungsmethoden am Trägerelement 150 sind ebenfalls möglich.

Das Abdeckelement 705 umfasst bevorzugt einen sich in radialer Richtung erstreckenden Abschnitt 720, der einen axialen Zugriff auf die Wicklungen 120 verhindern kann. Der Abschnitt 720 hat in der dargestellten Ausführungsform im Wesentlichen die Form eines Kreisrings, der sich bevorzugt auf dem gesamten Umfang um die Drehachse 105 erstreckt. An vorbestimmten Stellen kann der Abschnitt 720 Aussparungen 725 aufweisen, die einen Zugriff insbesondere auf diejenigen Endabschnitte von Hairpin-Elementen 135 erlauben kann, die miteinander oder mit einem Abschlussabschnitt 175 eines Schaltrings 145 kontaktiert werden sollen. Das Kontaktieren kann einen axialen Zugriff eines Kontaktierungswerkzeugs erlauben, das insbesondere ein Schweißgerät, bevorzugt ein Laser-Schweißgerät umfassen kann. Zu kontaktierende Elemente können sich durch die Aussparungen 725 erstrecken.

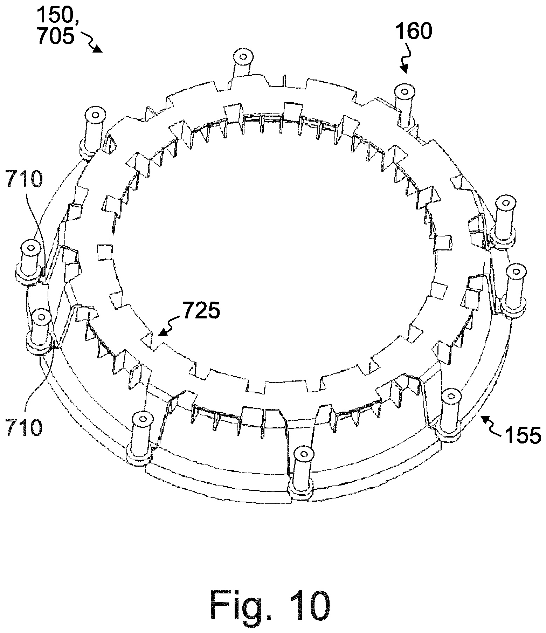

Das Abdeckelement 705 kann vor oder zusammen mit den Schaltringen 145 am Trägerelement 150 angebracht werden, sodass die komplett montierte Verschaltungsanordnung 140 an der elektrischen Maschine 100 positioniert und mit dieser kontaktiert werden kann. Wie unten mit Bezug auf Figur 10 noch genauer beschrieben ist, kann das Abdeckelement 705 auch einstückig mit dem Trägerelement 150 ausgeführt sein.

Bevorzugt sind am Abdeckelement 705 axiale Trennelemente 730 ausgebildet, die sich bevorzugt auf einem Radius oder einem Umfang zur Drehachse 105 erstrecken. Die Trennelemente 730 sind dazu eingerichtet, zwischen benachbarte Enden von Hairpin-Elementen 135 einzugreifen, um für einen gegenseitigen Schutz zu sorgen. Dadurch kann beispielsweise die Gefahr eines Kurzschlusses durch ein elektrisch leitfähiges Element in diesem Bereich verringert werden. Insbesondere können Spritzer von leitfähigem Material, die sich beim Verschweißen von Hairpin-Elementen 135 untereinander oder mit Anschlussabschnitten 175 der Schaltringe 145 bilden können, wirkungsvoll von der Kontaktierung eines benachbarten Bereichs abgehalten werden, der im Betrieb der elektrischen Maschine 100 ein anderes elektrisches Potential tragen kann.

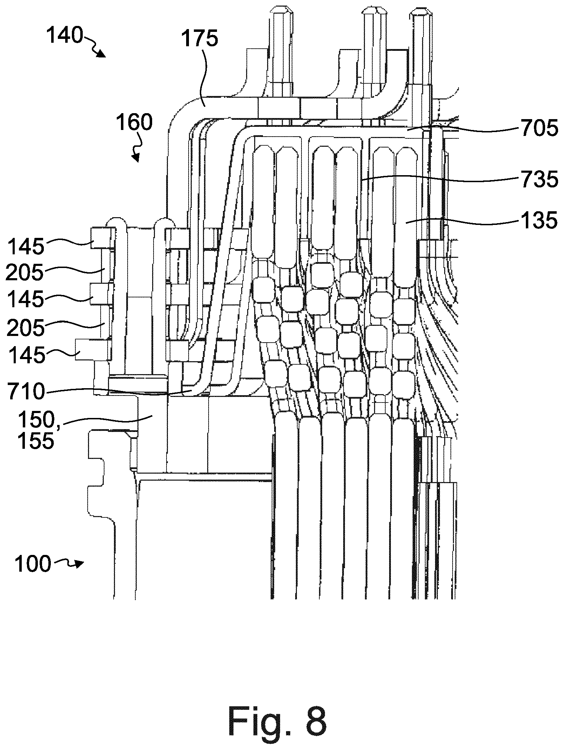

Figur 8 zeigt einen Längsschnitt durch eine Verschaltungsanordnung 140 mit einem Abdeckelement 705. Kontaktierungsstellen von Hairpin-Elementen 135 mit

Anschlussabschnitten 175 der Schaltringe 145 liegen hier axial oberhalb des radialen Abschnitts 720 und sind gut zugänglich. Die Befestigungsabschnitte 710 liegen axial am ringförmigen Abschnitt 155 des Trägerelements 150 an. Es wird deutlich, wie die Verschaltungsanordnung 140 in komplett zusammengefügtem Zustand axial auf die elektrische Maschine 100 aufgesetzt und mit dieser elektrisch und/oder mechanisch verbunden werden kann.

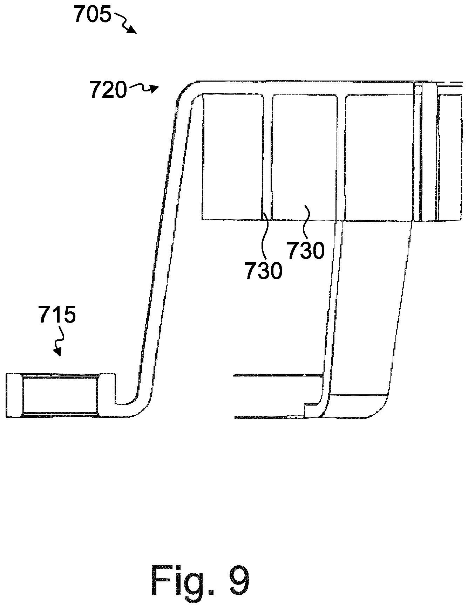

Figur 9 zeigt einen Längsschnitt durch ein Abdeckelement 705 in einer weiteren Ausführungsform mit sich in axialer Richtung erstreckenden Trennelementen 730.

Figur 10 zeigt ein Trägerelement 150 mit einstückig integriertem Abdeckelement 705. Befestigungsabschnitte 710 des Abdeckelements 705 enden bevorzugt im Bereich von Befestigungselementen 160 am ringförmigen Abschnitt 155 des Trägerelements 150.

Das Abdeckelement kann auch gemäß auch einer weiteren zeichnerisch nicht dargestellten Ausführungsform in Anlehnung an Fig. 8 durch Einklemmen in einen axial zwischen den Enden der Hairpin-Elemente 135 und den Anschlussabschnitten 175 der Schaltringe 145 ausgebildeten Zwischenraum festgelegt werden, so dass damit vorstehend erläuterte gesondert ausgebildete Befestigungsabschnitte 710 entfallen können.

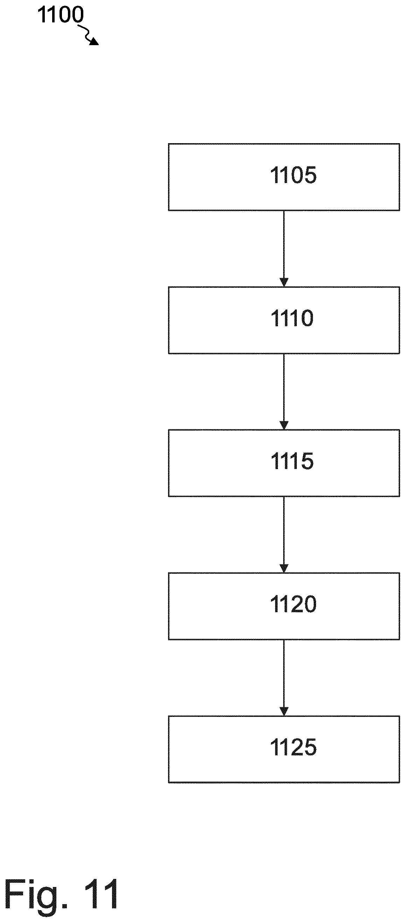

Figur 11 zeigt ein Ablaufdiagramm eines Verfahrens 1100 zur Montage einer Verschaltungsanordnung 140, insbesondere der hierin beschriebenen Art, an einer elektrischen Maschine 100. In einem Schritt 705 wird optional das Abdeckelement 705 axial auf das Trägerelement 150 axial aufgeschoben. Dieser Schritt kann entfallen, wenn kein Abdeckelement 705 vorgesehen ist oder das Abdeckelement 705 einstückig mit dem Trägerelement 150 ausgebildet ist. In einem Schritt 710 können die Schaltringe 145 einzeln oder als Paket axial auf das Trägerelement 150 aufgeschoben werden, wobei die Befestigungselemente 160 bevorzugt durch korrespondierende Aussparungen 165 der Schaltringe 145 treten. In diesem Schritt können auch Abstandselemente 205 zwischen axial benachbarten Schaltringen 145 an den Befestigungselementen 160 angebracht werden.

In einem Schritt 1115 können die Schaltringe 145 am Trägerelement 150 fixiert werden. Dazu können die Schaltringe 145 am Trägerelement 150 axial gegen den ringförmigen Abschnitt komprimiert werden und an axialen Enden der Befestigungselemente 160 können Sicherungselemente 170 angebracht oder ausgeformt werden.

In einem Schritt 1120 kann die Verschaltungsanordnung 140 an der elektrischen Maschine 100 angebracht werden. Dazu können insbesondere die Rastelemente 210 in korrespondierende Aussparungen an der Maschine 100 eingeführt und optional an ihnen gesichert werden, insbesondere mittels der Arretierungssstifte 225. In anderen Ausführungsformen kann die Fixierung der Verschaltungsanordnung 140 auch beispielsweise mittels Schrauben, Nieten oder Kleben erfolgen.

Anschließend kann in einem Schritt 1125 die Verschaltungsanordnung 140 mit der Maschine 100 kontaktiert werden, indem Anschlussabschnitte 175 mit Enden der Wicklungen 120, insbesondere Abschnitten der Hairpin-Elemente 135, elektrisch verbunden werden, bevorzugt mittels Schweißen, insbesondere mittels Laserschweißen.

Bezuqszeichen
- 100: elektrische Maschine
- 105: Drehachse
- 110: Stator
- 115: Rotor
- 120: Wicklung
- 125: Phase
- 130: magnetisches Leitelement
- 135: Hairpin-Element
- 140: Verschaltungsanordnung
- 145: Schaltring
- 150: Trägerelement
- 155: ringförmiger Abschnitt
- 160: Befestigungselement
- 165: Aussparung
- 170: Sicherungselement
- 175: Anschlussabschnitt
- 180: elektrischer Anschluss

- 205: Abstandselement
- 210: Rastelement
- 215: Rasthaken
- 220: Längsachse des Rastelements
- 225: Arretierungsstift

- 405: Sollbruchstelle

- 605: Schulter

- 705: Abdeckelement
- 710: Befestigungsabschnitt
- 715: Aussparung

- 720: radialer Abschnitt
- 725: Aussparung
- 730: axiales Trennelement

- 1100: Verfahren
- 1105: ggf. Aufschieben Abdeckelement
- 1110: Aufschieben Schaltringe auf Trägerelement
- 1115: Fixieren
- 1120: Anbringen an der elektrischen Maschine
- 1125: Kontaktieren

## Patentansprüche

1. Elektrische Maschine (100) mit einer Verschaltungsanordnung (140) mit mehreren Phasen (125), wobei jeder Phase (125) eine Wicklung (120) zugeordnet ist und wobei die Verschaltungsanordnung (140) folgendes aufweist: ein Trägerelement (150) mit einem ringförmigen Abschnitt (155), wobei der Abschnitt (155) zur Anlage an einem axialen Ende der elektrischen Maschine (100) eingerichtet ist; mehrere axial versetzte, scheibenförmige Schaltringe (145), wobei jeder Schaltring (145) zur Kontaktierung einer Wicklung (120) eingerichtet ist; wobei das Trägerelement (150) mehrere auf einem Umfang verteilte axiale Befestigungselemente (160) aufweist; und die Schaltringe (145) jeweils Aussparungen (165) zum Durchtritt der Befestigungselemente (160) aufweisen, **dadurch gekennzeichnet, dass** am ringförmigen Abschnitt (155) des Trägerelements (150) in entgegengesetzter axialer Richtung zum Befestigungselement (160) ein Rastelement (210) zum Eingriff in eine korrespondierende Aussparung an der elektrischen Maschine (100) ausgebildet ist, und dass das Rastelement (210) mehrere Rasthaken (215) umfasst, die radial zu einer Längsachse des Rastelements (210) elastisch gelagert sind, ferner umfassend einen Arretierungsstift (225), der koaxial zur Längsachse zwischen die Rasthaken (215) geschoben werden kann, um radial an den Rasthaken (215) anzuliegen.

2. Elektrische Maschine (100) mit einer Verschaltungsanordnung (140) nach Anspruch 1, wobei eines der Befestigungselemente (160) einen in axialer Richtung stufenförmig abnehmenden Querschnitt aufweist und zu dem Befestigungselement (160) korrespondierende Aussparungen (165) der Schaltringe (145) so gewählt sind, dass die Schaltringe (145) jeweils axial an einer Stufe des Befestigungselements (160) anliegen.

3. Elektrische Maschine (100) mit einer Verschaltungsanordnung (140) nach Anspruch 1 oder 2, ferner umfassend Abstandselemente (205), jeweils zur axialen Anlage zwischen benachbarten Schaltringen (145), wobei die Abstandselemente (205) jeweils Aussparungen (165) zum Durchtritt der Befestigungselemente (160) aufweisen.

4. Elektrische Maschine (100) mit einer Verschaltungsanordnung (140) nach einem der vorangehenden Ansprüche, ferner umfassend ein Sicherungselement (170) an einem axialen Ende des Befestigungselements (160).

5. Elektrische Maschine (100) mit einer Verschaltungsanordnung (140) nach Anspruch 4, wobei ein axiales Ende des Befestigungselements (160) in das Sicherungselement (170) umformbar ist.

6. Elektrische Maschine (100) mit einer Verschaltungsanordnung (140) nach einem der vorangegangenen Ansprüche, wobei der Arretierungsstift (225) koaxial zur Längsachse des Rastelements (210), aber entgegen dessen axialer Richtung am ringförmigen Abschnitt (155) des Trägerelements (150) ausgebildet ist; und wobei zwischen dem Arretierungsstift (225) und dem ringförmigen Abschnitt (155) eine Sollbruchstelle (405) ausgebildet ist.

7. Elektrische Maschine (100) mit einer Verschaltungsanordnung (140) nach einem der vorangehenden Ansprüche, wobei in einer Drehebene um die Drehachse der elektrischen Maschine (100) zwei Schaltringe (145) angeordnet sind, die zur Verbindung mit unterschiedlichen Phasen (125) eingerichtet sind.

8. Elektrische Maschine (100) mit einer Verschaltungsanordnung (140) nach einem der vorangehenden Ansprüche, wobei ein Schaltring (145) mehrere radiale Anschlussabschnitte (175) zur Kontaktierung einer Wicklung (120) aufweist, wobei die Anschlussabschnitte (175) in gleichen axialen Höhen bezüglich der Drehachse der elektrischen Maschine (100) liegen.

9. Elektrische Maschine (100) mit einer Verschaltungsanordnung (140) nach einem der vorangehenden Ansprüche, ferner umfassend ein Abdeckelement (705) zur axialen Abdeckung der Wicklungen (120), wobei das Abdeckelement (705) axiale Befestigungsabschnitte (710) aufweist, die jeweils am ringförmigen Abschnitt (155) des Trägerelements (150) enden.

10. Elektrische Maschine (100) mit einer Verschaltungsanordnung (140) nach Anspruch 9, wobei die Befestigungsabschnitte (710) jeweils Aussparungen zum axialen Durchtritt eines Befestigungselements (160) aufweisen.

11. Elektrische Maschine (100) mit einer Verschaltungsanordnung (140) nach Anspruch 9, wobei das Abdeckelement einstückig mit dem Trägerelement (150) ausgeführt ist.

12. Elektrische Maschine (100) mit einer Verschaltungsanordnung (140) nach einem der Ansprüche 9 bis 11, wobei die elektrische Maschine (100) eine Hairpin-Wicklung (120) aufweist und das Abdeckelement axiale Trennelemente zur Anlage zwischen benachbarten Hairpin-Elementen der Hairpin-Wicklung (120) aufweist.

13. Verfahren (1100) zur Montage einer Verschaltungsanordnung (140) an einer elektrischen Maschine (100) nach einem der Ansprüche 1 bis 12 mit mehreren Phasen (125), wobei jeder Phase (125) eine Wicklung (120) zugeordnet ist, wobei das Verfahren folgende Schritte umfasst: axiales Aufschieben (1110) mehrerer scheibenförmiger Schaltringe (145) auf ein ringförmiges Trägerelement (150), das zur Anlage an einem axialen Ende der elektrischen Maschine (100) eingerichtet ist; Fixieren (1115) der Schaltringe (145) am Trägerelement (150); Anbringen (1120) des Trägerelements (150) mit den Schaltringen (145) an der elektrischen Maschine (100); und Kontaktieren (1125) der Schaltringe (145) mit den Wicklungen (120).

## Claims

1. Electrical machine (100) having a connection arrangement (140) with a plurality of phases (125), wherein a winding (120) is assigned to each phase (125) and wherein the connection arrangement (140) has the following: a carrier element (150) with an annular section (155), wherein the section (155) is designed to bear against an axial end of the electrical machine (100); a plurality of axially offset, disc-like switching rings (145), wherein each switching ring (145) is designed to make contact with a winding (120); wherein the carrier element (150) has a plurality of axial fastening elements (160) distributed over a circumference; and the switching rings (145) each have cutouts (165) for the fastening elements (160) to pass through, **characterized in that** a latching element (210) for engaging into a corresponding cutout on the electrical machine (100) is formed on the annular section (155) of the carrier element (150) in the opposite axial direction to the fastening element (160), and **in that** the latching element (210) comprises a plurality of latching hooks (215) which are elastically mounted radially in relation to a longitudinal axis of the latching element (210), further comprising a locking pin (225) which can be pushed between the latching hooks (215) coaxially in relation to the longitudinal axis in order to bear radially against the latching hooks (215).

2. Electrical machine (100) having a connection arrangement (140) according to Claim 1, wherein one of the fastening elements (160) has a cross section which decreases in a step-like manner in the axial direction and cutouts (165), corresponding to the fastening element (160), of the switching rings (145) are selected such that the switching rings (145) each bear axially against a step of the fastening element (160).

3. Electrical machine (100) having a connection arrangement (140) according to Claim 1 or 2, further comprising spacer elements (205), in each case for bearing axially between adjacent switching rings (145), wherein the spacer elements (205) each have cutouts (165) for the fastening elements (160) to pass through.

4. Electrical machine (100) having a connection arrangement (140) according to one of the preceding claims, further comprising a securing element (170) at an axial end of the fastening element (160).

5. Electrical machine (100) having a connection arrangement (140) according to Claim 4, wherein an axial end of the fastening element (160) can be reshaped into the securing element (170).

6. Electrical machine (100) having a connection arrangement (140) according to one of the preceding claims, wherein the locking pin (225) is formed coaxially in relation to the longitudinal axis of the latching element (210) but against its axial direction on the annular section (155) of the carrier element (150); and wherein a predetermined breaking point (405) is formed between the locking pin (225) and the annular section (155) .

7. Electrical machine (100) having a connection arrangement (140) according to one of the preceding claims, wherein two switching rings (145), which are designed for connection to different phases (125), are arranged in a plane of rotation about the rotation axis of the electrical machine (100).

8. Electrical machine (100) having a connection arrangement (140) according to one of the preceding claims, wherein a switching ring (145) has a plurality of radial connecting sections (175) for making contact with a winding (120), wherein the connecting sections (175) are at the same axial heights with respect to the rotation axis of the electrical machine (100).

9. Electrical machine (100) having a connection arrangement (140) according to one of the preceding claims, further comprising a covering element (705) for axially covering the windings (120), wherein the covering element (705) has axial fastening sections (710) which each end at the annular section (155) of the carrier element (150).

10. Electrical machine (100) having a connection arrangement (140) according to Claim 9, wherein the fastening sections (710) each have cutouts for a fastening element (160) to pass through in an axial manner.

11. Electrical machine (100) having a connection arrangement (140) according to Claim 9, wherein the covering element is formed in one piece with the carrier element (150).

12. Electrical machine (100) having a connection arrangement (140) according to one of Claims 9 to 11, wherein the electrical machine (100) has a hairpin winding (120) and the covering element has axial separating elements for bearing between adjacent hairpin elements of the hairpin winding (120).

13. Method (1100) for mounting a connection arrangement (140) on an electrical machine (100) according to one of Claims 1 to 12 with a plurality of phases (125), wherein a winding (120) is assigned to each phase (125), wherein the method comprises the following steps: axially pushing (1110) a plurality of disc-like switching rings (145) onto an annular carrier element (150) which is designed to bear against an axial end of the electrical machine (100); fixing (1115) the switching rings (145) to the carrier element (150); fitting (1120) the carrier element (150) with the switching rings (145) to the electrical machine (100); and contact-connecting (1125) the switching rings (145) to the windings (120).

## Revendications

1. Machine électrique (100) munie d'un agencement d'interconnexion (140) à plusieurs phases (125), chaque phase (125) étant associée à un enroulement (120), et l'agencement d'interconnexion (140) présentant ce qui suit : un élément de support (150) doté d'une partie annulaire (155), la partie (155) étant aménagée pour se placer contre une extrémité axiale de la machine électrique (100) ; plusieurs bagues de commutation (145) en forme de disque, décalées axialement, chaque bague de commutation (145) étant aménagée pour la mise en contact d'un enroulement (120) ; l'élément de support (150) présentant plusieurs éléments de fixation axiaux (160) répartis sur une circonférence ; et les bagues de commutation (145) présentant respectivement des évidements (165) pour le passage des éléments de fixation (160), **caractérisée en ce que** sur la partie annulaire (155) de l'élément de support (150), dans la direction axiale par rapport à l'élément de fixation (160), un élément d'encliquetage (210) est réalisé pour venir en prise dans un évidement correspondant sur la machine électrique (100), et **en ce que** l'élément d'encliquetage (210) comprend plusieurs crochets d'encliquetage (215) qui sont montés élastiques radialement par rapport à un axe longitudinal de l'élément d'encliquetage, comprenant en outre une tige d'arrêt (225) qui peut être poussée coaxialement à l'axe longitudinal entre les crochets d'encliquetage (215) pour se placer radialement contre le crochet d'encliquetage (215).

2. Machine électrique (100) munie d'un agencement d'interconnexion (140) selon la revendication 1, dans laquelle l'un des éléments de fixation (160) présente une section transversale diminuant par paliers dans la direction axiale, et des évidements (165) correspondants à l'élément de fixation (160) des bagues de commutation (145) sont sélectionnés de telle sorte que les bagues de commutation (145) se placent respectivement axialement contre un palier de l'élément de fixation (160) .

3. Machine électrique (100) munie d'un agencement d'interconnexion (140) selon la revendication 1 ou 2, comprenant en outre des écarteurs (205), respectivement pour se placer axialement entre des bagues de commutation (145) voisines, les écarteurs (205) présentant respectivement des évidements (165) pour le passage des éléments de fixation (160).

4. Machine électrique (100) munie d'un agencement d'interconnexion (140) selon l'une quelconque des revendications précédentes, comprenant en outre un élément de blocage (170) à une extrémité axiale de l'élément de fixation (160).

5. Machine électrique (100) munie d'un agencement d'interconnexion (140) selon la revendication 4, dans laquelle une extrémité axiale de l'élément de fixation (160) peut être transformée en élément de blocage (170) .

6. Machine électrique (100) munie d'un agencement d'interconnexion (140) selon l'une quelconque des revendications précédentes, dans laquelle la tige d'arrêt (225) est réalisée coaxialement à l'axe longitudinal de l'élément d'encliquetage (210) mais à l'opposé de sa direction axiale sur la partie annulaire (155) de l'élément de support (150) ; et dans laquelle un point destiné à la rupture (405) est réalisé entre la tige d'arrêt (225) et la partie annulaire (155).

7. Machine électrique (100) munie d'un agencement d'interconnexion (140) selon l'une quelconque des revendications précédentes, dans laquelle, dans un plan de rotation autour de l'axe de rotation de la machine électrique (100), deux bagues de commutation (145) sont disposées qui sont aménagées pour la liaison à différentes phases (125).

8. Machine électrique (100) munie d'un agencement d'interconnexion (140) selon l'une quelconque des revendications précédentes, dans laquelle une bague de commutation (145) présente plusieurs parties de connexion radiales (175) pour la mise en contact d'un enroulement (120), les parties de connexion (175) étant situées à des hauteurs axiales identiques par rapport à l'axe de rotation de la machine électrique (100).

9. Machine électrique (100) munie d'un agencement d'interconnexion (140) selon l'une quelconque des revendications précédentes, comprenant en outre un élément de recouvrement (705) pour le recouvrement axial des enroulements (120), dans laquelle l'élément de recouvrement (705) présente des parties de fixation axiales (710) qui se terminent respectivement à la partie annulaire (155) de l'élément de support (150).

10. Machine électrique (100) munie d'un agencement d'interconnexion (140) selon la revendication 9, dans laquelle les parties de fixation (710) présentent respectivement des évidements pour le passage axial d'un élément de fixation (160).

11. Machine électrique (100) munie d'un agencement d'interconnexion (140) selon la revendication 9, dans laquelle l'élément de recouvrement est réalisé d'un seul tenant avec l'élément de support (150).

12. Machine électrique (100) munie d'un agencement d'interconnexion (140) selon l'une quelconque des revendications 9 à 11, dans laquelle la machine électrique (100) présente un enroulement en épingle à cheveux (120) et l'élément de recouvrement présente des éléments de séparation axiaux destinés à se placer entre des éléments en épingle à cheveux voisins de l'enroulement en épingle à cheveux (120).

13. Procédé (1100) de montage d'un agencement d'interconnexion (140) sur une machine électrique (100) à plusieurs phases (125) selon l'une quelconque des revendications 1 à 12, chaque phase (125) étant associée à un enroulement (120), le procédé comprenant les étapes suivantes consistant à : enfiler axialement (1110) plusieurs bagues de commutation (145) en forme de disque sur un élément de support annulaire (150) qui est aménagé pour se placer à une extrémité axiale de la machine électrique (100) ; fixer (1115) les bagues de commutation (145) sur l'élément de support (150) ; attacher (1120) l'élément de support (150) muni des bagues de commutation (145) à la machine électrique (100) ; et mettre en contact (1125) les bagues de commutation (145) avec les enroulements (120).
